# EUROPEAN PATENT APPLICATION

(11) **EP 4 542 077 A1**
(43) Date of publication of application: **23.04.2025**
(21) Application number: 23910006.8
(22) Date of filing: 06.12.2023
(51) Int. Cl.: F16D 65/16

(54) **CALIPER DISC BRAKE AND VEHICLE COMPRISING SAME**

(30) Priority: 26.12.2022 CN 202211678473
(71) Applicant: Nio Technology (Anhui) Co., Ltd, Hefei City, Anhui 230601 (CN)
(72) Inventor: TAO, Lexiao, Shanghai 201804 (CN); CHEN, Qiuer, Shanghai 201804 (CN)
(74) Representative: Vossius & Partner Patentanwälte Rechtsanwälte mbB
(86) International application number: PCT/CN2023/136717
(87) International publication number: WO 2024/140076

(57) **Abstract**

The invention relates to the technical field of caliper disc brakes, and in particular to a caliper disc brake and a vehicle comprising the caliper disc brake. To solve the problems of the existing fixed calipers, such as difficult machining, long machining time, and reduced structural strength of the caliper body, the caliper disc brake of the invention comprises a fixed caliper which comprises a caliper body, wherein piston chambers are respectively provided on opposite sides in the caliper body; a communication oil circuit, an inlet oil circuit and a bridging oil circuit are further provided in the caliper body, the piston chambers are in communication with the inlet oil circuit via the communication oil circuit, and the two opposite piston chambers are in communication with each other via the bridging oil circuit; one end of the inlet oil circuit is located in the caliper body, and the other end extends through an outer surface of the caliper body; the piston chambers are formed by means of casting and then machining; the communication oil circuit and the bridging oil circuit are directly formed by means of casting; and the inlet oil circuit is formed by means of machining drilling. The complex internal oil pipeline is formed by means of casting and then communicated by means of machining drilling.

## Description

The present application claims the priority to Chinese Patent Application No. CN 202211678473.8, filed on December 26, 2022, which is incorporated herein by reference in its entirety.

### TECHNICAL FIELD

The invention relates to the technical field of caliper disc brakes, and in particular to a caliper disc brake and a vehicle including the caliper disc brake.

### BACKGROUND ART

A caliper disc brake includes a brake disc and a fixed caliper. The brake disc is fixed on a wheel hub. The fixed caliper straddles the brake disc and is fixedly mounted to a steering knuckle, and can neither rotate nor move along the axis of the brake disc. Two opposing pistons are provided on the fixed brake caliper. For the opposing pistons, their bodies are fixed, and a brake fluid is dispensed to the pistons on both sides via an oil pipeline on the caliper. When a driver depresses a brake pedal to brake a vehicle, the brake fluid in a brake master cylinder enters two communicating cylinders in the caliper body via an oil inlet, and brake friction plates on both sides are pressed against a brake disc fixedly connected to a wheel, so as to generate a braking force to stop the wheel from rotating and thus stop the entire vehicle. There are two mainstream types of built-in fixed calipers in the prior art. In one type, an external hard pipeline is used to replace a bridging oil circuit and vertically extend through the caliper body. Although this reduces the complexity of the internal oil circuit, it increases the complexity of assembly for the caliper and impairs the overall appearance of the caliper body. In the other type, multiple oil passages are formed in the caliper body by means of machining drilling, and the communication between the inside and outside of the caliper body and between piston chambers is achieved via the oil passages. However, the oil passages in the caliper body are long and set to be at a large angle, resulting in difficult machining, severe wear of tools during machining, long machining time, and blockage of the oil passages due to the debris generated during machining remaining in the oil passages. Also, to communicate the multiple oil passages inside the caliper body, it is necessary to form multiple oil passage holes on the outer contour of the caliper body by means of machining drilling, which reduces the structural strength of the caliper body.

Accordingly, there is a need in the art for a new-type caliper disc brake to solve the problems of the existing fixed calipers, such as difficult machining, long machining time, complex assembly, and reduced structural strength of the caliper body.

### SUMMARY

The invention aims to solve the above technical problems, namely, to solve the problems of the existing fixed calipers, such as difficult machining, long machining time, complex assembly, and reduced structural strength of the caliper body.

In a first aspect, the invention provides a caliper disc brake. The caliper disc brake includes a fixed caliper which includes a caliper body, wherein piston chambers are respectively provided on opposite sides of the caliper body;
a communication oil circuit, an inlet oil circuit and a bridging oil circuit are further provided in the caliper body, the piston chambers are in communication with the inlet oil circuit via the communication oil circuit, and the two opposite piston chambers are in communication with each other via the bridging oil circuit; one end of the inlet oil circuit is located in the caliper body, and the other end extends through an outer surface of the caliper body;
the piston chambers are formed by means of casting and then machining; the communication oil circuit and the bridging oil circuit are directly formed by means of casting; and
the inlet oil circuit is formed by means of machining drilling.

In a preferred technical solution of the caliper disc brake described above, the piston chambers include a first piston chamber and a second piston chamber arranged opposite each other at upper and lower sides of the caliper body.

In a preferred technical solution of the caliper disc brake described above, the caliper body is provided with three closed doors, two of which are vent holes and the other is an oil drain hole, the vent holes and the oil drain hole being all in communication with the piston chambers.

In a preferred technical solution of the caliper disc brake described above, the communication oil circuit includes a first oil circuit and a second oil circuit, the bridging oil circuit includes a first bridging oil circuit and a second bridging oil circuit, the first oil circuit is in communication with the first piston chamber, and the second oil circuit is in communication with the second piston chamber; and

a third oil circuit is provided in the caliper body, the first oil circuit is in communication with the third oil circuit via the first bridging oil circuit, the second oil circuit is in communication with the third oil circuit via the second bridging oil circuit, the third oil circuit is formed by means of machining drilling, and an opening at one end of the third oil circuit serves as the oil drain hole.

In a preferred technical solution of the caliper disc brake described above, the caliper body further includes a fourth oil circuit and a fifth oil circuit, the fourth oil circuit being in communication with the first piston chamber via the first oil circuit, and the fifth oil circuit being in communication with the second piston chamber via the second oil circuit; the fourth oil circuit and the fifth oil circuit are both formed by means of machining drilling; and an opening at one end of the fourth oil circuit and an opening at one end of the fifth oil circuit serve as the vent holes.

In a preferred technical solution of the caliper disc brake described above, a removable vent screw is provided on the vent hole; and/or a removable caliper oil plug is provided on the oil drain hole.

In a preferred technical solution of the caliper disc brake described above, an angle between the first bridging oil circuit and the first oil circuit is greater than 90° and less than 180°; and an angle between the second bridging oil circuit and the second oil circuit is greater than 90° and less than 180°.

In a preferred technical solution of the caliper disc brake described above, a hose connector is mounted to a port of the inlet oil circuit.

In a second aspect, the invention provides a method for machining a caliper disc brake. The machining method is used for machining the caliper disc brake described in the above technical solutions.

The machining method includes:
forming the piston chambers by means of casting and then machining;
forming the communication oil circuit and the bridging oil circuit by means of casting to communicate the communication oil circuit, the piston chambers and the bridging oil circuit; and
forming the inlet oil circuit by means of machining drilling to communicate the inlet oil circuit and the communication oil circuit.

In a third aspect, the invention further provides a vehicle including a caliper disc brake according to any of the above technical solutions.

It can be understood by those skilled in the art that the caliper disc brake according to the invention includes a fixed caliper which includes a caliper body, wherein piston chambers are respectively provided on opposite sides of the caliper body;
a communication oil circuit, an inlet oil circuit and a bridging oil circuit are further provided in the caliper body, the piston chambers are in communication with the inlet oil circuit via the communication oil circuit, and the two opposite piston chambers are in communication with each other via the bridging oil circuit; one end of the inlet oil circuit is located in the caliper body, and the other end extends through an outer surface of the caliper body;
the piston chambers are formed by means of casting and then machining; the communication oil circuit and the bridging oil circuit are directly formed by means of casting; and the inlet oil circuit is formed by means of machining drilling.

With the above technical solutions, in the invention, the arrangement of the oil circuit on the caliper body is optimized, in which a complex built-in oil pipeline is formed by means of casting, then an oil inlet pipeline communicating to the outside of the caliper body is formed by means of machining drilling, and thus the pipelines formed by the two machining processes are in communication as a whole, so that the oil pipeline in the caliper body can be set at a large angle, which reduces the requirements for tools, and also reduces the severe wear of the tools during the machining process and shortens the machining cycle. Since the depth of the machining drilling is shortened, the blockage of the oil passages due to the debris generated during the machining process remaining in the complex oil passages is reduced. In addition, by reducing the number of holes drilled in the outer side of the caliper body, the structural strength of the caliper body is enhanced, the complexity of assembly is reduced, and the overall aesthetics of the caliper body is improved.

### BRIEF DESCRIPTION OF THE DRAWINGS

Preferred implementations of the invention are described below with reference to the drawings, in which:
FIG. 1 is a structural diagram of a fixed caliper of a caliper disc brake according to the invention; and
FIG. 2 is a cross-sectional view of the fixed caliper of the caliper disc brake according to the invention.

### List of reference signs:

1'. caliper body; 1. first piston chamber; 11. first oil circuit; 12. first bridging oil circuit; 2. second piston chamber; 21. second oil circuit; 22. second bridging oil circuit; 3. third oil circuit; 31. oil drain hole; 32. caliper oil plug; 4. fourth oil circuit; 41. first vent hole; 42. vent screw; 5. fifth oil circuit; 51. second vent hole; 6. inlet oil circuit; 61. hose connector.

### DETAILED DESCRIPTION OF EMBODIMENTS

Preferred implementations of the invention will be described below with reference to the drawings. Those skilled in the art should understand that these implementations are merely used to explain the technical principles of the invention, and are not intended to limit the scope of protection of the invention. Those skilled in the art can make adjustments to the implementations according to requirements, so as to adapt to specific application scenarios. For example, although the invention is described with reference to a vehicle, there is no limitation on the type of vehicle, and the caliper disc brake of the invention can be used in electric vehicles, fuel vehicles, and heavy machinery equipment such as excavators.

It should be noted that, in the description of the invention, the terms that indicate the directions or positional relationships, such as "upper", "lower", "inner" and "outer", are based on the directions or positional relationships shown in the drawings, are merely for ease of description instead of indicating or implying that the device or element must have a particular orientation and be constructed and operated in a particular orientation, and therefore should not be construed as limiting the invention. In addition, the terms "first", "second", "third", "fourth" and "fifth" are for descriptive purposes only and should not be construed as indicating or implying relative importance.

In addition, it should also be noted that, in the description of the invention, the terms "install", "engage" and "connect" should be interpreted in a broad sense unless explicitly stated and limited otherwise, and, for example, can mean a fixed connection, a removable connection or an integral connection; may be a mechanical connection or an electrical connection; or may be a direct connection, an indirect connection by means of an intermediary, or internal communication between two elements. For those skilled in the art, the specific meanings of the foregoing terms in the invention can be interpreted according to a specific situation.

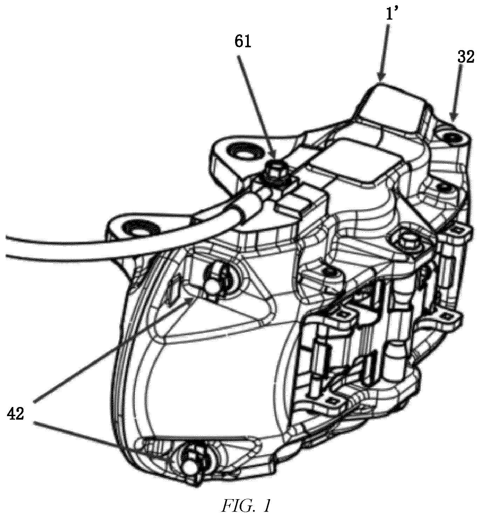

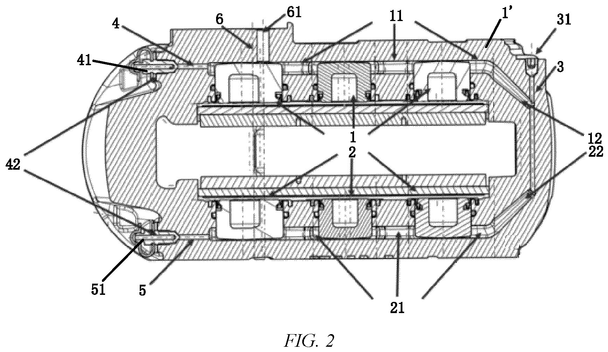

Referring to FIGS. 1 and 2, to solve the problems of the existing fixed calipers, such as difficult machining, long machining time, and reduced structural strength of the caliper body, the caliper disc brake of the invention includes a fixed caliper which includes a caliper body 1', wherein piston chambers are respectively provided on opposite sides in the caliper body 1';

a communication oil circuit, an inlet oil circuit and a bridging oil circuit are further provided in the caliper body 1', the piston chambers are in communication with the inlet oil circuit 6 via the communication oil circuit, and the two opposite piston chambers are in communication with each other via the bridging oil circuit; one end of the inlet oil circuit 6 is located in the caliper body, and the other end extends through an outer surface of the caliper body 1';

the piston chambers are formed by means of casting and then machining; the communication oil circuit and the bridging oil circuit are directly formed by means of casting; and the inlet oil circuit 6 is formed by means of machining drilling.

The above configuration has the following advantages. In the invention, the arrangement of the oil circuit on the caliper body 1' is optimized, in which a complex built-in oil pipeline is formed by means of casting, then an oil inlet pipeline communicating to the outside of the caliper body 1' is formed by means of machining drilling, and thus the pipelines formed by the two machining processes are in communication as a whole, so that the oil pipeline in the caliper body 1' can be set at a large angle, which reduces the requirements for tools, and also reduces the severe wear of the tools during the machining process and shortens the machining cycle. Since the depth of the machining drilling is shortened, the blockage of the oil passages due to the debris generated during the machining process remaining in the complex oil passages is reduced. In addition, by reducing the number of holes drilled in the outer side of the caliper body 1', the structural strength of the caliper body 1' is enhanced.

The method for machining the caliper body 1' of the fixed caliper includes the following steps:
forming the piston chambers by means of casting and then machining;
forming the communication oil circuit and the bridging oil circuit by means of casting to communicate the communication oil circuit, the piston chamber and the bridging oil circuit; and
forming the inlet oil circuit by means of machining drilling to communicate the inlet oil circuit and the communication oil circuit.

Referring to FIGS. 1 and 2, in a possible implementation, a caliper disc brake includes a fixed caliper which includes a caliper body 1', wherein three first piston chambers 1 and three second piston chambers 2 are respectively arranged on upper and lower sides in the caliper body 1', and a first piston and a second piston that can slide in the piston chambers are provided in the first piston chambers 1 and the second piston chambers 2, respectively;
a communication oil circuit, an inlet oil circuit, a third oil circuit 3 and a bridging oil circuit are provided in the caliper body 1'; the communication oil circuit includes a first oil circuit 11 that communicates the three first piston chambers 1, and a second oil circuit 21 that communicates the three second piston chambers 2; one end of the inlet oil circuit 6 extends through the outer surface of the caliper body 1', and the other end is in communication with the first piston chamber 1 via the first oil circuit 11; and an end of the inlet oil circuit 6 extending through the outer surface of the caliper body 1' is connected to a hose connector that is configured to be connected to an oil inlet hose.

Further, one end of the third oil circuit 3 extends through the outer surface of the caliper body 1', and the other end is located in the caliper body 1'; one end of an opening of the third oil circuit 3 serves as an oil drain hole 31 that is configured to discharge the used brake fluid via the oil drain hole 31 when the brake fluid needs to be replaced, and a removable caliper oil plug 32 is provided on the oil drain hole 31;
the bridging oil circuit includes a first bridging oil circuit 12 and a second bridging oil circuit 22, the first oil circuit 11 is in communication with the third oil circuit 3 via the first bridging oil circuit 12, and the second oil circuit 21 is in communication with the third oil circuit 3 via the second bridging oil circuit 22; and there are angles between the first oil circuit 11 and the first bridging oil circuit 12 and between the second oil circuit 21 and the second bridging oil circuit 22, and the angles are greater than 90° and less than 180°.

A fourth oil circuit 4 and a fifth oil circuit 5 are further provided in the caliper body 1'. One end of the fourth oil circuit 4 and one end of the fifth oil circuit 5 both extend through the outer surface of the caliper body 1', one end of the opening of the fourth oil circuit 4 serves as a first vent hole 41, one end of the opening of the fifth oil circuit 5 serves as a second vent hole 51, the other end of the fourth oil circuit 4 is in communication with the first piston chamber 1 via the first oil circuit 11, and the other end of the fifth oil circuit 5 is in communication with the second piston chamber 2 via the second oil circuit 21. Removable vent screws 42 are respectively provided on the first vent hole 41 and the second vent hole 51. Finally, the first vent hole 41 and the second vent hole 51 are closed with the vent screws 42, and the oil drain hole 31 is closed by the caliper oil plug 32, so that the fourth oil circuit 4, the first piston chamber 1, the first oil circuit 11, the first bridging oil circuit 12, the third oil circuit 3, the second bridging oil circuit 22, the second oil circuit 21, the second piston chamber 2 and the fifth oil circuit 5 form a closed oil chamber pipeline.

It should be noted that the number of piston chambers may be 2, 4, 5 or 8, etc. in addition to 6. The piston chambers may be symmetrically arranged in an up-down direction, or symmetrically arranged in a left-right direction, or asymmetrically arranged. Therefore, the number and arrangement structure of the piston chambers are not limited in the invention, and can be set by those skilled in the art as needed.

The brake fluid flows in the caliper body 1' as follows.

The brake fluid enters the inlet oil circuit 6 via an oil inlet hose and the hose connector 61, and then fills the first oil circuit 11 on the caliper body 1'. Since the two vent screws 42 on the caliper body 1' achieve good sealing, the brake fluid enters the third oil circuit 3 via the first oil circuit 11 and the first bridging oil circuit 12, and passes through the three first piston chambers 1 at the upper part of the caliper body 1'. Then, since the caliper oil plug 32 blocks the port of the third oil circuit 3, the brake fluid enters the second bridging oil circuit 22 and the second oil circuit 21 via the third oil circuit 3, then passes through the three second piston oil circuits at the lower part of the caliper body 1', and finally reaches the vent screw 42 at the lower part of the caliper body 1'. The vent screw 42 achieves sealing after the venting. Finally, the brake fluid is dispensed to the pistons on both sides via the pipelines on the caliper, and at the same time, a brake pad is pushed to contact a brake disc, so as to achieve a braking effect.

The method for machining the caliper body 1' of the fixed caliper includes the following steps:
forming the first piston chamber 1 and the second piston chamber 2 by means of casting to form a blank chamber and then machining for grinding;
forming the first oil circuit 11, the second oil circuit 21, the first bridging oil circuit 12 and the second bridging oil circuit 22 by means of casting, so that the first piston chamber 1, the first oil circuit 11 and the first bridging oil circuit 12 are in communication with each other, and the second piston chamber 2, the second oil circuit 21 and the second bridging oil circuit 22 are in communication with each other, so as to achieve communication between the first piston chamber 1 and the second piston chamber 2; and
forming the inlet oil circuit 6, the third oil circuit 3, the fourth oil circuit 4 and the fifth oil circuit 5 by means of machining drilling, so that the inlet oil circuit 6 is in communication with the first piston chamber 1, the third oil circuit 3 is in communication with both the first bridging oil circuit 12 and the second bridging oil circuit 22, the fourth oil circuit 4 is in communication with the first oil circuit 11 via the first piston chamber 1, and the fifth oil circuit 5 is in communication with the second oil circuit 21 via the second piston chamber 2.

With the optimized arrangement of the pipelines, the oil circuit built into the caliper body 1' is formed by gravity casting using a sand core during the casting process, and the oil circuit on the caliper body 1' communicating to the outside is formed by means of drilling, so that the complex oil circuit is formed by means of a non-machining method, which reduces the requirements of the complex and multi-angle oil circuits for the machining process and tools, improves the machining efficiency of the caliper body 1' and the service life of the tools, and indirectly reduces the machining cost of the fixed caliper body 1'. In addition, the oil circuit inside the caliper body 1' is formed by means of casting, and the casting process is not influenced by the angles between the oil circuits, for example, the angle between the first oil circuit 11 and the first bridging oil circuit 12 and the angle between the second oil circuit 21 and the second bridging oil circuit 22 are greater than 90° and less than 180°, so that even in the case of a large angle between the oil circuits, the oil circuits can be formed by means of casting, without the need of drilling in the outer side of the caliper body 1' to obtain the first bridging oil circuit 11 and the second bridging oil circuit 12, thereby reducing the number of holes drilled in the caliper body 1'. Also, the vent holes, the oil inlet hole and the oil outlet hole in the caliper body 1' are all formed by means of drilling on the outer edge of the contour of the caliper body 1', and the communication between the oil circuit formed by means of drilling and the oil circuit formed by means of casting is achieved to form a complete oil circuit in the caliper body 1'. By means of reducing the number of holes drilled in the outer surface of the caliper body 1', the influence of drilling on the rigidity and strength of the caliper body 1' can be minimized. In addition, the fixed caliper of the invention has reduced number of sub-components, reduced complexity of assembly, and improved overall aesthetics of the caliper body.

In another implementation, one of the inlet oil circuit 6 and the third oil circuit 3 may be omitted, and the brake fluid may be injected into or discharged from the caliper body 1' via one end of the opening of the third oil circuit 3 or the inlet oil circuit 6, that is, the injection and discharge of the brake fluid are performed via one oil circuit, and this may be set by those skilled in the art as needed.

As described in the first paragraph of this section, the above implementations are only used to explain the principles of the invention, and are not intended to limit the scope of protection of the invention. Those skilled in the art can adjust the above structures without departing from the principle of the invention, so that the invention is applicable to more specific application scenarios.

Heretofore, the technical solutions of the invention have been described with reference to the preferred implementations shown in the drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention.

## Claims

1. A caliper disc brake, comprising a fixed caliper which comprises a caliper body, wherein piston chambers are respectively provided on opposite sides of the caliper body;
a communication oil circuit, an inlet oil circuit and a bridging oil circuit are further provided in the caliper body, the piston chambers are in communication with the inlet oil circuit via the communication oil circuit, and the two opposite piston chambers are in communication with each other via the bridging oil circuit; one end of the inlet oil circuit is located in the caliper body, and the other end extends through an outer surface of the caliper body;
the piston chambers are formed by means of casting and then machining; the communication oil circuit and the bridging oil circuit are directly formed by means of casting; and
the inlet oil circuit is formed by means of machining drilling.

2. The caliper disc brake according to claim 1, wherein the piston chambers include a first piston chamber and a second piston chamber arranged opposite each other at upper and lower sides of the caliper body.

3. The caliper disc brake according to claim 2, wherein the caliper body is provided with three closed doors, two of which are vent holes and the other is an oil drain hole, the vent holes and the oil drain hole being all in communication with the piston chambers.

4. The caliper disc brake according to claim 3, wherein the communication oil circuit comprises a first oil circuit and a second oil circuit, the bridging oil circuit comprises a first bridging oil circuit and a second bridging oil circuit, the first oil circuit is in communication with the first piston chamber, and the second oil circuit is in communication with the second piston chamber; and
a third oil circuit is provided in the caliper body, the first oil circuit is in communication with the third oil circuit via the first bridging oil circuit, the second oil circuit is in communication with the third oil circuit via the second bridging oil circuit, the third oil circuit is formed by means of machining drilling, and an opening at one end of the third oil circuit serves as the oil drain hole.

5. The caliper disc brake according to claim 4, wherein the caliper body further comprises a fourth oil circuit and a fifth oil circuit, the fourth oil circuit being in communication with the first piston chamber via the first oil circuit, and the fifth oil circuit being in communication with the second piston chamber via the second oil circuit; the fourth oil circuit and the fifth oil circuit are both formed by means of machining drilling; and an opening at one end of the fourth oil circuit and an opening at one end of the fifth oil circuit serve as the vent holes.

6. The caliper disc brake according to claim 5, wherein a removable vent screw is provided on the vent hole; and/or a removable caliper oil plug is provided on the oil drain hole.

7. The caliper disc brake according to claim 4, wherein an angle between the first bridging oil circuit and the first oil circuit is greater than 90° and less than 180°; and an angle between the second bridging oil circuit and the second oil circuit is greater than 90° and less than 180°.

8. The caliper disc brake according to claim 1, wherein a hose connector is mounted to a port of the inlet oil circuit.

9. A method for machining a caliper disc brake, the machining method being used for machining a caliper disc brake according to claim 1,
the machining method comprising:
forming the piston chambers by means of casting and then machining;
forming the communication oil circuit and the bridging oil circuit by means of casting to communicate the communication oil circuit, the piston chambers and the bridging oil circuit; and
forming the inlet oil circuit by means of machining drilling to communicate the inlet oil circuit and the communication oil circuit.

10. A vehicle provided with a caliper disc brake according to any one of claims 1 to 8.
